# EUROPEAN PATENT APPLICATION

(11) **EP 4 683 087 A1**
(43) Date of publication of application: **21.01.2026**
(21) Application number: 24931118.4
(22) Date of filing: 19.11.2024
(51) Int. Cl.: H01M 50/383, H01M 10/658, H01M 50/30, H01M 50/249

(54) **BATTERY MODULE, AND BATTERY PACK AND VEHICLE INCLUDING SAME**

(30) Priority: 18.03.2024 KR 20240037140
(71) Applicant: LG Energy Solution, Ltd., Seoul 07335 (KR)
(72) Inventor: PARK, Ju-Hun, Daejeon 34122 (KR); CHANG, Hyuk-Kyun, Daejeon 34122 (KR)
(74) Representative: Plasseraud IP
(86) International application number: PCT/KR2024/018290
(87) International publication number: WO 2025/198120

(57) **Abstract**

Disclosed is a battery module, and a battery pack and a vehicle including the same. The battery module includes a battery cell stack in which a plurality of battery cells are stacked; a module case in which the battery cell stack is accommodated; and a flame suppression pad disposed between the plurality of battery cells within the module case, wherein a cut portion is formed at one end of the flame suppression pad.

## Description

### TECHNICAL FIELD

This application is based on and claims priority from Korean Patent Application No. 10-2024-0037140, filed on March 18, 2024, with the Korean Intellectual Property Office, the disclosure of which is incorporated herein in its entirety by reference.

The present disclosure relates to a battery module, and a battery pack and a vehicle including the same, and more specifically, to a battery module capable of preventing propagation of flame, gas or high-temperature particles, and a battery pack and a vehicle including the same.

### BACKGROUND ART

In general, a secondary battery refers to a battery that may be repeatedly charged and discharged, such as a lithium-ion battery, a lithium polymer battery, a nickel-cadmium battery, a nickel-hydrogen battery, or a nickel-zinc battery. A battery cell, which corresponds to the most basic secondary battery, may provide an output voltage of approximately 2.5 V to 4.2 V.

Recently, as these battery cells are applied to devices requiring high output voltage and large charging capacity, such as electric vehicles or ESS (Energy Storage Systems), a battery module configured by connecting a number of battery cells in series, parallel, or a combination of series and parallel, and a battery pack configured by connecting the battery modules again in series, parallel, or a combination of series and parallel, are widely used.

Lithium secondary batteries are currently in the spotlight due to their advantages such as high operating voltage and significantly high energy density. However, because they use organic electrolytes, overcharging of lithium secondary batteries may cause overcurrent and overheating, which may lead to explosion or ignition in severe cases.

In the case of a conventional battery module, a refractory pad is disposed between a battery cell accommodated inside the battery module and a neighboring battery cell, but due to errors in processing, etc., the module case of the battery module and the refractory pad are not in close contact. As a result, a gap is formed between the module case and the refractory pad, and when a thermal event occurs, a flame or gas is propagated to another battery cell disposed nearby through the gap.

If flame or gas is propagated to another battery cell or another battery module, a thermal runaway phenomenon may occur, and if the flame leaks to the outside due to the thermal runaway phenomenon, there is a problem that the driver of the electric vehicle may be burned or put in a dangerous situation.

Alternatively, there is a problem in that the battery module or battery pack is damaged or burned down by a chain reaction of flames caused by flame propagation, so it may be impossible to secure the stability of the battery module or battery pack.

### DISCLOSURE

### Technical Problem

The present disclosure is directed to providing a battery module capable of preventing flame, gas or high-temperature particles generated in one battery cell from being propagated to another neighboring battery cell or another battery module, and a battery pack and a vehicle including the same.

In addition, the present disclosure is directed to providing a battery module capable of emitting flame, gas or high-temperature particles in a preset direction, and a battery pack and a vehicle including the same.

In addition, the present disclosure is directed to providing a battery module capable of preventing a thermal runaway phenomenon by preventing a flame chain reaction caused by flame propagation, and a battery pack and a vehicle including the same.

However, the technical problems to be solved by the present disclosure are not limited to the above, and other problems not mentioned herein will be clearly understood by those skilled in the art from the following description.

### Technical Solution

In one aspect of the present disclosure, there is provided a battery module comprising: a battery cell stack in which a plurality of battery cells are stacked; a module case in which the battery cell stack is accommodated; and a flame suppression pad disposed between the plurality of battery cells within the module case, wherein a cut portion is formed at one end of the flame suppression pad.

In an embodiment, the cut portion may be formed at an upper side of the flame suppression pad.

In an embodiment, the module case may include an upper module case, and when the upper module case comes into contact with the flame suppression pad, the cut portion may be spread and comes into close contact with the upper module case.

In an embodiment, the flame suppression pad may be spread outward by the cut portion.

In an embodiment, the flame suppression pad may be classified into a first pad portion and a second pad portion based on the cut portion, and the first pad portion and the second pad portion may be spread so that an end of the first pad portion and an end of the second pad portion face away from each other.

In an embodiment, the battery module may further comprise a first direction-adjusting coupling member coupled to inner sides of the first pad portion and the second pad portion to adjust a spreading direction of the first pad portion and the second pad portion.

In an embodiment, the first direction-adjusting coupling member may be a sheet.

In an embodiment, the flame suppression pad may be spread inward by the cut portion.

In an embodiment, the flame suppression pad may be classified into a first pad portion and a second pad portion based on the cut portion, and ends of the first pad portion and the second pad portion may be spread in a state of being in contact with each other.

In an embodiment, the battery module may further comprise a second direction-adjusting coupling member coupled to outer sides of the first pad portion and the second pad portion to adjust a spreading direction of the first pad portion and the second pad portion.

In an embodiment, the second direction-adjusting coupling member may be a sheet.

In an embodiment, the flame suppression pad may be made of a heat-resistant material.

In an embodiment, the flame suppression pad may be made of a silicone-based material.

In an embodiment, the module case may be formed in one piece.

Meanwhile, according to another aspect of the present disclosure, there may be provided a battery pack including the battery module described above, and a vehicle including the battery module described above.

### Advantageous Effects

The embodiments of the present disclosure have the effect of preventing flame, gas or high-temperature particles generated in one battery cell from being propagated to another neighboring battery cell or another battery module.

In addition, the present disclosure has the effect of being able to discharge flame, gas or high-temperature particles in a preset direction.

In addition, the present disclosure has the effect of preventing a thermal runaway phenomenon by preventing flame chain reaction caused by flame propagation.

The accompanying drawings illustrate a preferred embodiment of the present disclosure and together with the foregoing disclosure, serve to provide further understanding of the technical features of the present disclosure, and thus, the present disclosure is not construed as being limited to the drawing.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a schematic overall perspective view showing a battery module according to the first embodiment of the present disclosure.
FIG. 2 is a cross-sectional view showing the battery module according to the first embodiment of the present disclosure, in which an upper module case is separated from a side module case.
FIG. 3 is an enlarged view showing part A of FIG. 2.
FIG. 4 is a cross-sectional view showing the battery module according to the first embodiment of the present disclosure, in which the upper module case is coupled to the side module case.
FIG. 5 is an enlarged view showing part B of FIG. 4.
FIGS. 6 and 7 illustrate a process in which a flame suppression pad spreads as a modified embodiment of FIG. 5.
IG. 8 is a cross-sectional view showing a battery module according to the second embodiment of the present disclosure, in which the upper module case is coupled to the side module case.
FIG. 9 is an enlarged view showing part C of FIG. 8.
FIGS. 10 and 11 illustrate a process in which the flame suppression pad spreads as a modified embodiment of FIG. 9.
FIG. 12 is an enlarged view showing an upper side of the flame suppression pad in a battery module according to the third embodiment of the present disclosure.
FIG. 13 is a drawing schematically showing the configuration of a battery pack including the battery module according to each embodiment of the present disclosure.
FIG. 14 is a drawing for explaining a vehicle including the battery pack of FIG. 13.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

In the drawings, the size of each component or a specific portion constituting the component is exaggerated, omitted, or schematically illustrated for convenience and clarity of description. Therefore, the size of each component does not fully reflect the actual size. If it is determined that a detailed description of a related known function or configuration may unnecessarily obscure the gist of the present disclosure, such a description will be omitted.

As used herein, the term 'coupling' or 'connection' refers to not only a case where one member and another member are directly coupled or directly connected, but also a case where one member is indirectly coupled or indirectly connected to another member through a joint member.

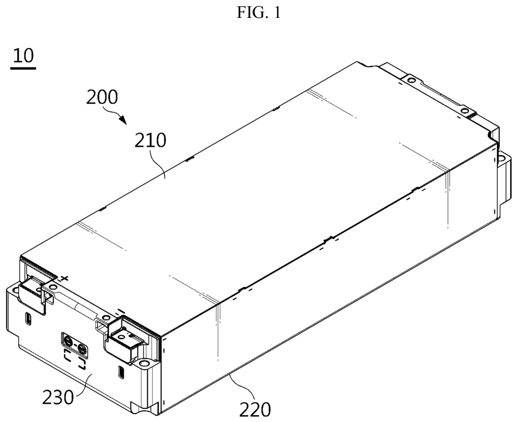

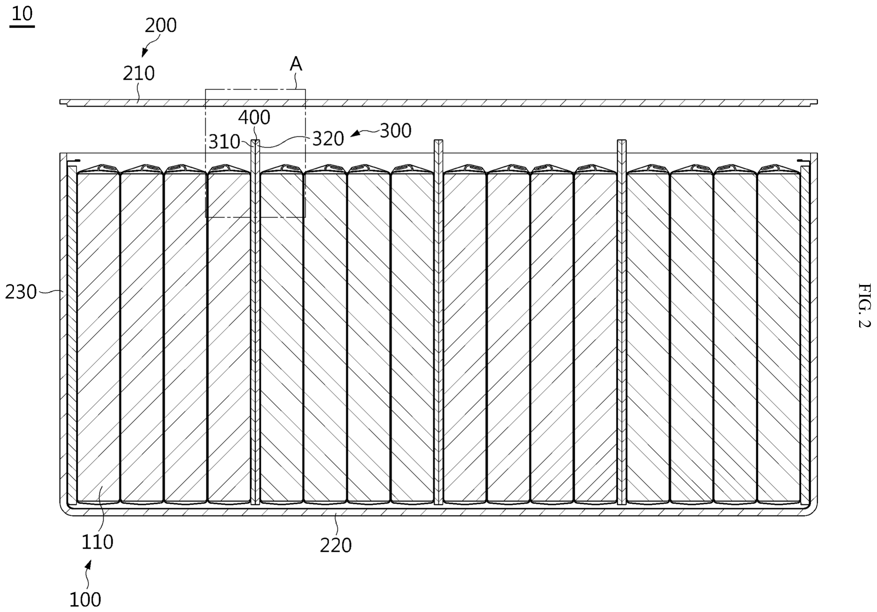

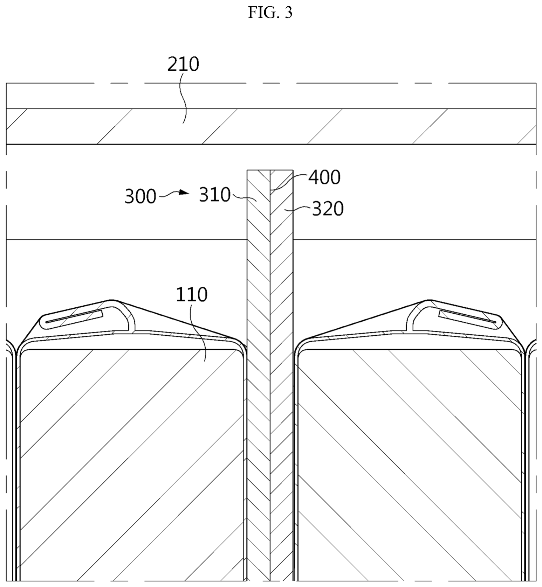

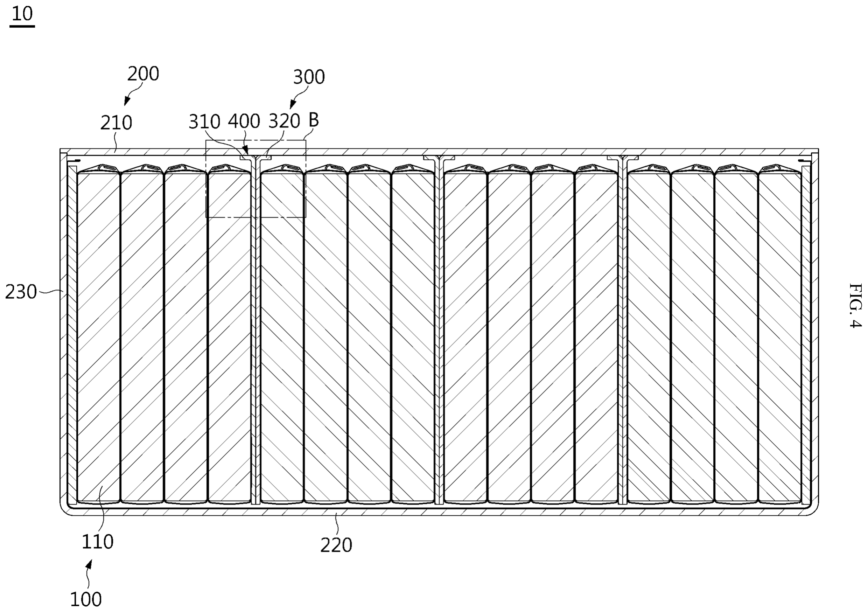

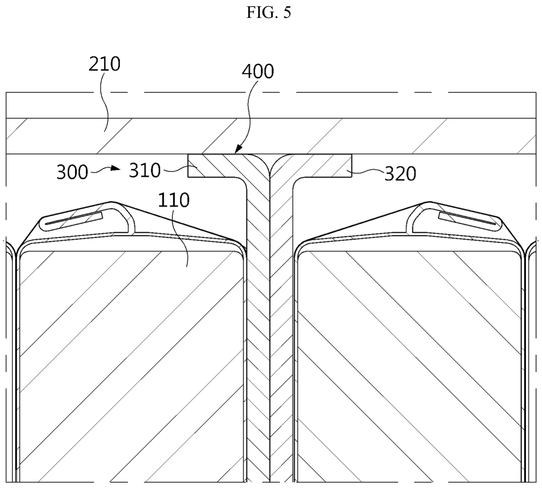

FIG. 1 is a schematic overall perspective view showing a battery module according to the first embodiment of the present disclosure, FIG. 2 is a cross-sectional view showing the battery module according to the first embodiment of the present disclosure, in which an upper module case is separated from a side module case, FIG. 3 is an enlarged view showing part A of FIG. 2, FIG. 4 is a cross-sectional view showing the battery module according to the first embodiment of the present disclosure, in which the upper module case is coupled to the side module case, and FIG. 5 is an enlarged view showing part B of FIG. 4.

Referring to FIGS. 1 to 5, a battery module 10 according to an embodiment of the present disclosure includes a battery cell stack 100, a module case 200, and a flame suppression pad 300.

The battery cell stack 100 may be configured to stack a plurality of battery cells 110. The battery cells 110 may have various structures, and further, the plurality of battery cells 110 may be stacked in various ways.

The battery cell 110 may have a structure in which a plurality of unit cells, in each of which a positive electrode plate, a separator and a negative electrode plate are arranged in the order, or a plurality of bi-cells, in each of which a positive electrode plate, a separator, a negative electrode plate, a separator, a positive electrode plate, a separator and a negative electrode plate are arranged in the order, are stacked according to the battery capacity.

The battery cell 110 may be equipped with an electrode lead. The electrode lead is a type of terminal that is exposed to the outside and connected to an external device, and a conductive material may be used. The electrode lead may include a positive electrode lead and a negative electrode lead.

The plurality of battery cells 110 may be electrically connected via a bus bar (not shown). However, the bus bar is not shown in the drawings.

The battery cell stack 100 may be provided with a plurality of cartridges (not shown) that accommodate the battery cells 110. Each cartridge (not shown) may be manufactured by injection molding of plastic, and a plurality of cartridges (not shown) having an accommodation portion that accommodates the battery cells 110 may be stacked. A cartridge assembly in which a plurality of cartridges (not shown) are stacked may be provided with a connector element or a terminal element.

The connector element may include various types of electrical connection components or connecting members for connection to, for example, a BMS (Battery Management System, not shown) that may provide data on the voltage or temperature of the battery cell 110.

Also, the terminal element is a main terminal connected to the battery cell 110 and includes a positive electrode terminal and a negative electrode terminal. The terminal element is equipped with a terminal bolt so that the terminal element may be electrically connected to the outside. Meanwhile, the battery cell 110 may have various shapes.

The battery cell stack 100 is accommodated in a module case 200. In addition, the module case 200 may include an upper module case 210, a lower module case 220, and a side module case 230.

The module case 200 surrounds the battery cells 110 and thereby protects the battery cells 110 from external vibrations or shocks.

The module case 200 may include a mica plate made of mica having both thermal insulation and heat resistance to prevent flame leakage. Here, the mica plate may include not only a flat mica plate but also a shape having a mixture of flat and curved surfaces.

The module case 200 may be formed in a shape corresponding to the shape of the battery cell stack 100. For example, if the battery cell stack 100 is formed in a hexahedral shape with a rectangular cross-section, the module case 200 may also be formed in a hexahedral shape corresponding thereto.

The module case 200 may be formed by, for example, bending a metal plate, whereby the module case 200 may be manufactured in an integral form. If the module case 200 is manufactured in an integral form, the coupling process may become easy and simple. Alternatively, the module case 200 may be provided in a separate form and coupled by welding, etc. However, the material of the module case 200 is not limited to a metal material.

If the module case 200 is formed integrally or coupled by welding, an adhesive is unnecessary. Thus, even if the temperature rises inside the battery module 10, the upper module case 210 does not separate from the side module case 230, thereby preventing flame, gas, or high-temperature particles from being emitted all at once in an undesirable direction.

The flame suppression pad 300 blocks flame, gas, or high-temperature particles generated from any battery cell 110 from propagating to another battery cell 110. To this end, as shown in FIGS. 2 and 4, the flame suppression pad 300 may be disposed between the plurality of battery cells 110 within the module case 200. For example, the flame suppression pad 300 may be disposed between four battery cells 110, but is not limited thereto.

Here, the flame suppression pads 300 may be arranged at equal intervals or may be arranged at different intervals.

The flame suppression pad 300 may be made of various materials, and for example, may be made of a heat-resistant material so as to prevent the transfer of flame and heat generated from the battery cell 110. For example, the flame suppression pad 300 may be made of a silicone-based material.

Here, the flame suppression pad 300 may be made of a silicone foam pad. The silicone foam pad is a foamed pad with pores formed therein, and has high thermal and chemical stability and excellent flame retardancy and insulation properties. Therefore, if the flame suppression pad 300 is made of a silicone foam pad, the propagation of flame, gas, or high-temperature particles may be reliably prevented.

In addition, the flame suppression pad 300 may also play a role in absorbing swelling when swelling (a phenomenon in which the battery cell 110 is inflated) occurs in the battery cell 110.

Referring to FIGS. 2 and 4, a cut portion 400 may be formed at one end of the flame suppression pad 300. Here, the flame suppression pad 300 is classified into a first pad portion 310 and a second pad portion 320 based on the cut portion 400, and may be configured such that the first pad portion 310 and the second pad portion 320, that is, two pad portions, are coupled. In FIG. 2, the first pad portion 310 is positioned at the left side of the cut portion 400, and the second pad portion 320 is positioned at the right side of the cut portion 400.

In addition, the cut portion 400 may be formed at one end of the flame suppression pad 300, for example, the upper end. Here, the first pad portion 310 and the second pad portion 320 may be coupled in various ways, for example, by bonding, but are not limited thereto.

Referring to FIGS. 2 and 3, before the upper module case 210 is coupled to the side module case 230, the cut portion 400 of the flame suppression pad 300 is not spread, and the first pad portion 310 and the second pad portion 320 are in contact with each other. However, as shown in FIGS. 4 and 5, if the upper module case 210 is coupled to the side module case 230, the cut portion 400 of the flame suppression pad 300 is spread.

That is, if the upper module case 210 comes into contact with the flame suppression pad 300 and pressurizes the flame suppression pad 300, the cut portion 400 is spread and the upper end of the flame suppression pad 300 comes into close contact with the upper module case 210.

Here, referring to FIGS. 4 and 5, the flame suppression pad 300 is spread outward by the cut portion 400. That is, the first pad portion 310 and the second pad portion 320 are spread so that the end of the first pad portion 310 and the end of the second pad portion 320 face away from each other. That is, referring to FIG. 5, the end of the first pad portion 310 is spread so as to face the left, and the end of the second pad portion 320 is spread so as to face the right.

If the flame suppression pad 300 is pressurized by the upper module case 210 and the first pad portion 310 and the second pad portion 320 are spread outward so that the end of the first pad portion 310 and the end of the second pad portion 320 face away from each other by the cut portion 400 in this way, one end of the flame suppression pad 300, for example, the upper end, may be brought into close contact with the upper module case 210.

If the upper end of the flame suppression pad 300 is in close contact with the upper module case 210 in this way, flame, gas, or high-temperature particles generated from any battery cell 110 are blocked by the flame suppression pad 300 and the upper module case 210.

That is, the above configuration may prevent flame, gas or high-temperature particles from propagating to other battery cells 110.

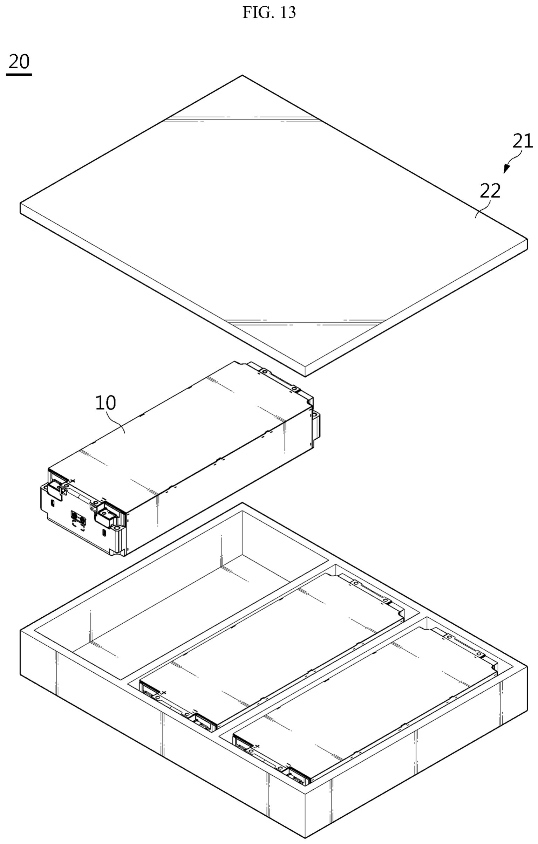

Meanwhile, a battery pack 20 (see FIG. 13), explained later, may include a pack case 21, and the pack case 21 may include an upper pack case 22. A space may be formed between the upper pack case 22 and the upper module case 210.

In addition, the flame, gas or high-temperature particles generated from any battery cell 110 may be discharged in a preset direction through the space between the upper pack case 22 and the upper module case 210.

Accordingly, the battery module 10 according to an embodiment of the present disclosure has the effect of enabling directional venting that may discharge flame, gas or high-temperature particles in a direction intended by the designer.

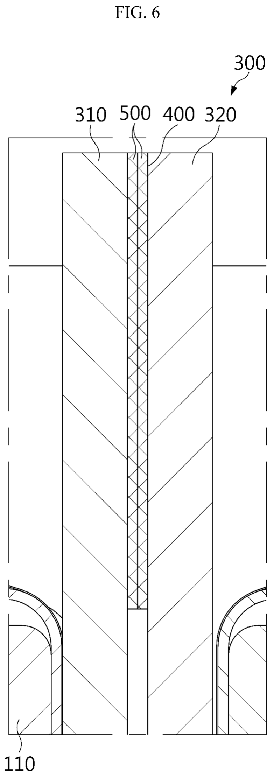

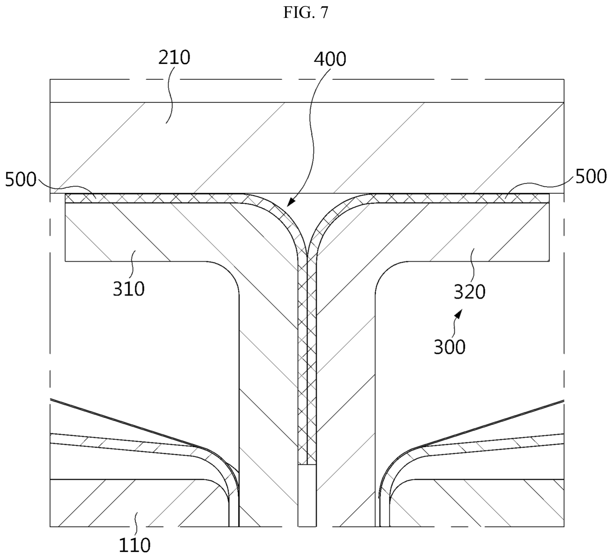

FIGS. 6 and 7 illustrate a process in which a flame suppression pad spreads as a modified embodiment of FIG. 5.

Referring to FIGS. 6 and 7, the first direction-adjusting coupling member 500 may be coupled to the inner sides of the first pad portion 310 and the second pad portion 320 so as to adjust the spreading direction of the first pad portion 310 and the second pad portion 320.

Here, the first direction-adjusting coupling member 500 may be configured in various ways, and may be, for example, various types of sheets, but is not limited thereto.

That is, as shown in FIGS. 6 and 7, if the first direction-adjusting coupling member 500 is respectively coupled to the inner side of the first pad portion 310 and the inner side of the second pad portion 320, when the flame suppression pad 300 is pressurized by the upper module case 210, the first direction-adjusting coupling member 500 provides a force that suppresses deformation of the first pad portion 310 and the second pad portion 320, so that the first pad portion 310 and the second pad portion 320 receive more force toward the outside.

Accordingly, as shown in FIG. 7, the first pad portion 310 and the second pad portion 320 are spread outward away from each other.

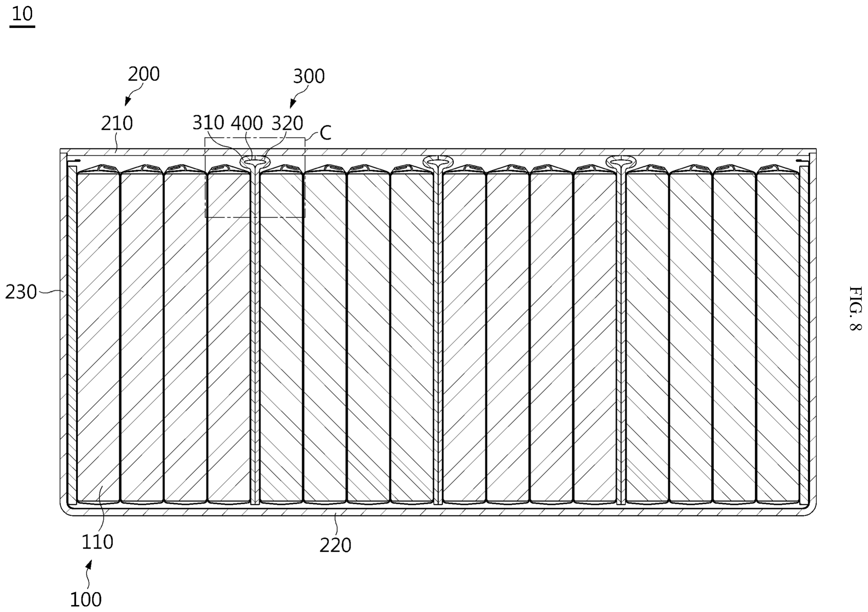

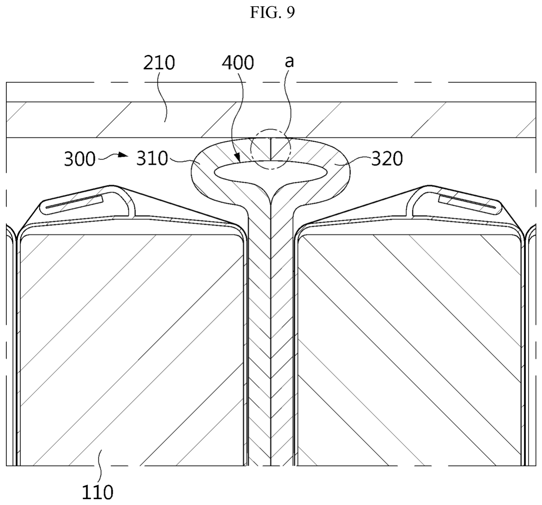

IG. 8 is a cross-sectional view showing a battery module according to the second embodiment of the present disclosure, in which the upper module case is coupled to the side module case, and FIG. 9 is an enlarged view showing part C of FIG. 8.

The second embodiment of the present disclosure is structurally different from the first embodiment in that the spreading direction of the first pad portion 310 and the second pad portion 320 is different from that of the first embodiment. However, the features of the first embodiment, which are common to the second embodiment will not be described in detail again. In addition, the features of the second embodiment, which are applicable to the first embodiment, may also be applied to the first embodiment.

Referring to FIGS. 8 and 9, the flame suppression pad 300 is spread by the cut portion 400. That is, the end of the first pad portion 310 and the end of the second pad portion 320 may be configured to be spread in a state of contacting each other (see part a of FIG. 9).

If the flame suppression pad 300 is pressurized by the upper module case 210 and the end of the first pad portion 310 and the end of the second pad portion 320 are spread in a state of coming into contact with each other by the cut portion 400 in this way, one end of the flame suppression pad 300, for example, the upper end, may be brought into close contact with the upper module case 210.

If one end of the flame suppression pad 300 is in close contact with the upper module case 210 in this way, flame, gas, or high-temperature particles generated from any battery cell 110 are blocked by the flame suppression pad 300 and the upper module case 210.

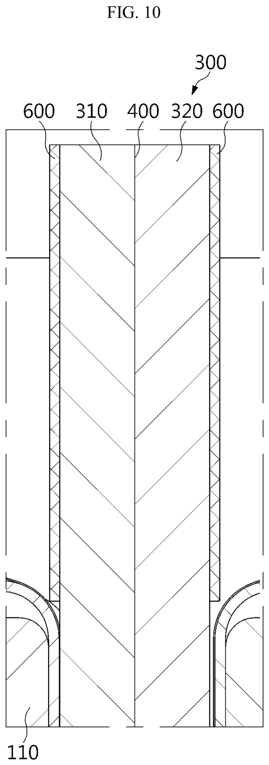

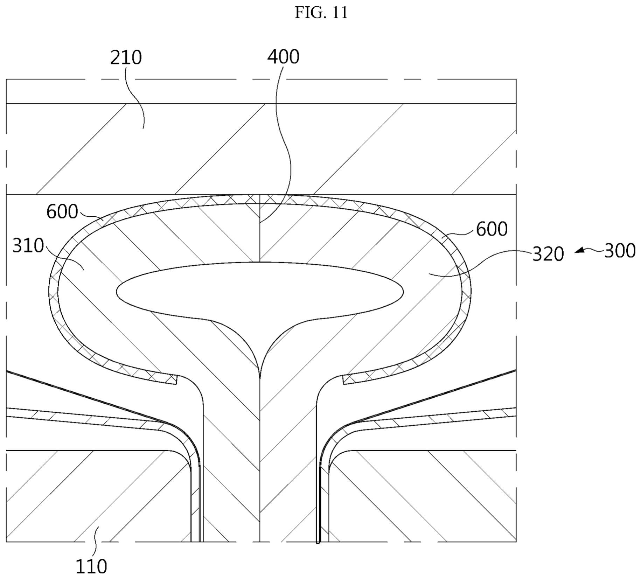

FIGS. 10 and 11 illustrate a process in which the flame suppression pad spreads as a modified embodiment of FIG. 9.

Referring to FIGS. 10 and 11, the second direction-adjusting coupling member 600 may be coupled to the outer sides of the first pad portion 310 and the second pad portion 320, respectively, so as to adjust the spreading direction of the first pad portion 310 and the second pad portion 320.

Here, the second direction-adjusting coupling member 600 may be configured in various ways, and may be, for example, various types of sheets, but is not limited thereto.

That is, as shown in FIGS. 10 and 11, if the second direction-adjusting coupling member 600 is respectively coupled to the outer sides of the first pad portion 310 and the outer side of the second pad portion 320, when the flame suppression pad 300 is pressurized by the upper module case 210, the second direction-adjusting coupling member 600 provides a force that suppresses deformation of the first pad portion 310 and the second pad portion 320, so that the first pad portion 310 and the second pad portion 320 receive more force inwardly.

Accordingly, the first pad portion 310 and the second pad portion 320 may be configured to be spread so that the end of the first pad portion 310 and the end of the second pad portion 320 are in contact with each other.

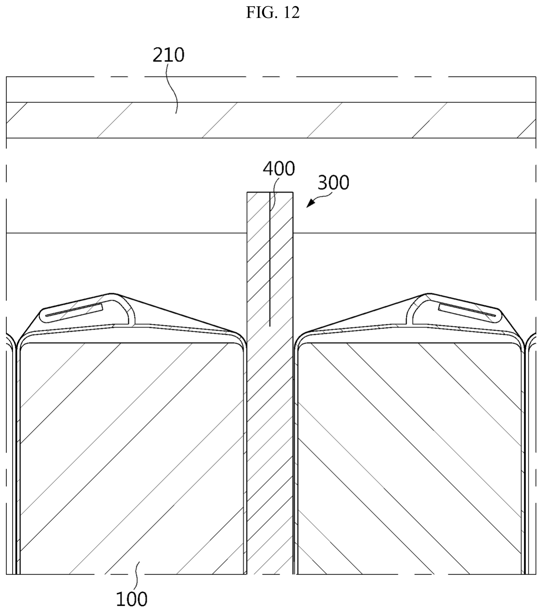

FIG. 12 is an enlarged view showing an upper side of the flame suppression pad in a battery module according to the third embodiment of the present disclosure.

The third embodiment of the present disclosure is different from the first embodiment and the second embodiment in that the flame suppression pad 300 is made of one pad portion instead of two pad portions. However, the features of the first or second embodiment, which are common to the third embodiment will not be described in detail again. In addition, the features of the third embodiment, which are applicable to the first or second embodiment, may also be applied to the first or second embodiment.

As described above, referring to FIG. 12, the flame suppression pad 300 is made of one pad portion, not two pad portions. However, a cut portion 400 is formed at one end of one pad portion, for example, the upper end, so that the flame suppression pad 300 may be spread.

In addition, if the upper module case 210 comes into contact with the flame suppression pad 300 and pressurizes the flame suppression pad 300, the cut portion 400 is spread and the upper end of the flame suppression pad 300 comes into contact with the upper module case 210, which is common to the first embodiment or the second embodiment described above, and this will not be described in detail again.

FIG. 13 is a drawing schematically showing the configuration of a battery pack including the battery module according to each embodiment of the present disclosure.

Referring to FIG. 13, a battery pack 20 according to an embodiment of the present disclosure may include one or more battery modules 10 according to each embodiment of the present disclosure described above.

In addition, the battery pack 20 may further include a pack case 21 for accommodating the battery module 10, and various devices for controlling charging and discharging of the cylindrical battery cell 110 included in the battery module 10, such as a BMS, a current sensor, and a fuse.

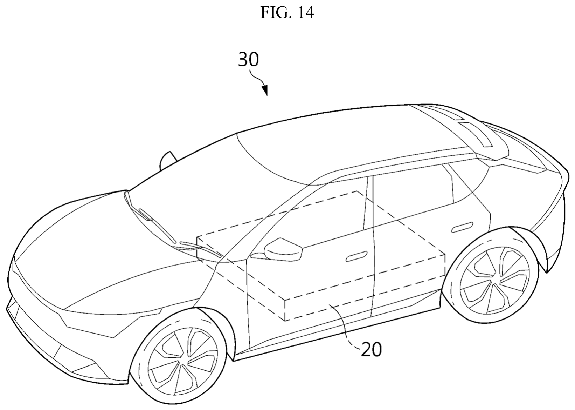

FIG. 14 is a drawing for explaining a vehicle including the battery pack of FIG. 13.

Referring to FIG. 14, a vehicle 30 according to an embodiment of the present disclosure may include one or more battery modules 10 according to each embodiment of the present disclosure or one or more battery packs 20 according to each embodiment of the present disclosure. Here, the battery pack 20 may include one or more battery modules 10 according to each embodiment of the present disclosure.

Here, the vehicle 30 includes various vehicles that are designed to use electricity, such as an electric vehicle or a hybrid electric vehicle.

When the terms indicating directions as used herein such as upper, lower, left, and right are used for convenience of description only, these terms are just for convenience of explanation, and it is obvious to those skilled in the art that the terms may change depending on the position of the stated element or an observer.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description. Therefore, the previously disclosed embodiments should be considered from an explanatory perspective rather than a limiting perspective. In other words, the scope of the true technical idea of the present disclosure is shown in the claims, and all differences within the scope of equivalence should be interpreted as being included in the present disclosure.

### INDUSTRIAL APPLICABILITY

The present disclosure relates to a battery module, and a battery pack and a vehicle including the same, and is particularly applicable to industries related to secondary batteries.

## Claims

1. A battery module comprising:
a battery cell stack in which a plurality of battery cells are stacked;
a module case in which the battery cell stack is accommodated; and
a flame suppression pad disposed between the plurality of battery cells within the module case,
wherein a cut portion is formed at one end of the flame suppression pad.

2. The battery module according to claim 1,
wherein the cut portion is formed at an upper side of the flame suppression pad.

3. The battery module according to claim 2,
wherein the module case includes an upper module case, and
wherein when the upper module case comes into contact with the flame suppression pad, the cut portion is spread and comes into close contact with the upper module case.

4. The battery module according to claim 3,
wherein the flame suppression pad is spread outward by the cut portion.

5. The battery module according to claim 4,
wherein the flame suppression pad is classified into a first pad portion and a second pad portion based on the cut portion, and the first pad portion and the second pad portion are spread so that an end of the first pad portion and an end of the second pad portion face away from each other.

6. The battery module according to claim 5, further comprising:
a first direction-adjusting coupling member coupled to inner sides of the first pad portion and the second pad portion to adjust a spreading direction of the first pad portion and the second pad portion.

7. The battery module according to claim 6,
wherein the first direction-adjusting coupling member is a sheet.

8. The battery module according to claim 3,
wherein the flame suppression pad is spread inward by the cut portion.

9. The battery module according to claim 8,
wherein the flame suppression pad is classified into a first pad portion and a second pad portion based on the cut portion, and ends of the first pad portion and the second pad portion are spread in a state of being in contact with each other.

10. The battery module according to claim 9, further comprising:
a second direction-adjusting coupling member coupled to outer sides of the first pad portion and the second pad portion to adjust a spreading direction of the first pad portion and the second pad portion.

11. The battery module according to claim 10,
wherein the second direction-adjusting coupling member is a sheet.

12. The battery module according to claim 1,
wherein the flame suppression pad is made of a heat-resistant material.

13. The battery module according to claim 12,
wherein the flame suppression pad is made of a silicone-based material.

14. The battery module according to claim 1,
wherein the module case is formed in one piece.

15. A battery pack comprising the battery module according to any one of claims 1 to 14.

16. A vehicle comprising the battery module according to any one of claims 1 to 14.
